# EUROPÄISCHE PATENTANMELDUNG

(11) **EP 4 682 420 A1**
(43) Veröffentlichungstag der Anmeldung: **21.01.2026**
(21) Anmeldenummer: 25188192.6
(22) Anmeldetag: 08.07.2025
(51) Int. Cl.: F16L 41/02, F16L 41/03, F16L 47/02, F16L 47/32, H01M 10/625, F16L 11/11, F16L 37/14

(54) **LEITUNGSSYSTEM MIT ZAHLREICHEN ABGÄNGEN**

(30) Priorität: 18.07.2024 DE 102024120428
(71) Anmelder: TI Automotive Technology Center GmbH, 76437 Rastatt (DE)
(72) Erfinder: Kizilay, Irfan, 68799 Reilingen (DE); Roeder, Manuel, 76437 Rastatt (DE); Leipold, Stefan, 67470 Seltz (FR)
(74) Vertreter: Andrejewski - Honke Patent- und Rechtsanwälte Partnerschaft mbB

(57) **Zusammenfassung**

Eine Hauptleitung (1) zum Verteilen oder Sammeln eines Mediums und insbesondere eines Temperiermediums weist ein Hauptrohr (2) und wenigstens drei Abgängen (3, 4) auf. Die Abgänge (3, 4) sind mit dem Hauptrohr (2) verbunden, wobei das Hauptrohr (2) eine Achse (A) umfasst und eine axiale Richtung definiert. Wenigstens einer der Abgängen (3, 4) weist einen Leitungsverbinder (5) und ein Rohrstück (6) auf. Ein erstes Ende des Rohrstücks (6) ist mit dem Hauptrohr (2) verbunden. Ein zweites. Ende des Rohrstücks (6) ist mit dem Leitungsverbinder (5) verbunden. Das erste Ende und vorzugsweise das zweite Ende des Rohrstücks (6) ist integral mit dem Hauptrohr (2) verbunden.

## Beschreibung

Die Erfindung betrifft eine Hauptleitung zum Verteilen oder Sammeln eines Mediums und insbesondere eines Temperiermediums, wobei die Hauptleitung ein Hauptrohr und wenigstens drei Abgänge aufweist, wobei die Abgänge mit dem Hauptrohr verbunden sind, wobei das Hauptrohr eine Achse A umfasst und eine axiale Richtung definiert, wobei wenigstens einer der Abgänge einen Leitungsverbinder und ein Rohrstück aufweist, wobei ein erstes Ende des Rohrstücks mit dem Hauptrohr verbunden ist, wobei ein zweites Ende des Rohrstücks mit dem Leitungsverbinder verbunden ist. Die Erfindung betrifft außerdem ein Leitungssystem umfassend die Hauptleitung, eine Verwendung der Hauptleitung und ein Verfahren zur Herstellung der Hauptleitung.

Eine derartige Hauptleitung ist in CN 117317437 A offenbart. Ein Hauptabgang einer Hauptleitung lässt das Medium in Form eines Temperiermediums in ein Hauptrohr strömen oder aus diesem heraus fließen. Das Hauptrohr befindet sich innerhalb eines Gehäuses einer Antriebsbatterie und weist mehrere Nebenabgänge auf, die allesamt innerhalb des Gehäuses angeordnet sind. Die Nebenabgänge sind an plattenförmige, hohl ausgebildete und hochkant stehende Wärmetauscher angeschlossen, die sich entlang einer Längsausdehnung der Antriebsbatterie im Inneren des Gehäuses erstrecken und die Batteriezellen - je nach Bedarf - kühlen oder erwärmen.

Nach Durchlaufen der Wärmetauscher erreicht das Temperiermedium gemäß CN 117317437 A zweite Nebenabgänge einer zweiten Hauptleitung. Die zweite Hauptleitung umfasst außerdem ein zweites Hauptrohr und einen zweiten Hauptabgang. Das Temperiermedium strömt von den zweiten Nebenabgängen in das zweite Hauptrohr, von dort in den zweiten Hauptabgang und schließlich aus dem Gehäuse der Antriebsbatterie heraus. Die Strömungsrichtung des Temperiermediums kehrt sich um, sobald ein Wechsel von einem Kühlmodus zu einem Heizmodus stattfindet oder umgekehrt. Die beiden Hauptleitungen bilden zusammen ein Leitungssystem, welches seinerseits ein Bestandteil eines Fluidsystems ist. Das Fluidsystem mag insbesondere noch einen Tank für das Temperiermedium und/oder eine Pumpe und/oder eine Wärmesenke und/oder eine Wärmequelle aufweisen.

Die vorzugsweise aus Aluminium gefertigten Wärmetauscher werden in der Praxis häufig von anderen Zulieferern hergestellt als die Leitungssysteme, die im Regelfall überwiegend Kunststoff aufweisen. Aufgrund des beengten Raums innerhalb des Gehäuses, aufgrund der teilweise recht zahlreichen Nebenabgänge (teilweise mehr als zehn je Hauptrohr) und aufgrund des Zusammenspiels mehrerer Komponenten bzw. Zulieferer (Batteriegehäuse, Wärmetauscher, Leitungssysteme) ist eine hohe Präzision des Leitungssystems bzw. Toleranzanforderung an den Anschluss der Nebenabgänge an die Wärmetauscher erforderlich.

Aus diesem Grund ist es aus der Praxis bekannt, die Nebenabgänge mit kurzen Wellrohrabschnitten zu versehen, wodurch die Nebenabgänge eine größere Flexibilität erhalten und die Toleranzanforderungen beim Anschluss der Nebenabgänge an die Wärmetauscher problemlos erfüllt werden können. Hierzu werden die Wellrohrabschnitte der Nebenabgänge mit einem hauptrohrseitigen Anschlussteil und einem wärmetauscherseitigen Leitungsverbinder verbunden. Das Anschlussteil dient der bevorzugt stoffschlüssigen Verbindung zwischen dem Hauptrohr und dem Wellrohrabschnitt des Nebenabgangs. Der Leitungsverbinder dient der Verbindung zwischen dem Wellrohrabschnitt des Nebenabgangs und dem Wärmetauscher.

Für die Herstellung jedes Nebenabgangs gemäß dem aus der Praxis bekannten Vorgehen fallen drei Schweißvorgänge (Anschlussteil an Wellrohrabschnitt und Leitungsverbinder an Wellrohrabschnitt) an. Mit einem dritten Schweißvorgang wird dann der Nebenabgang bzw. das Anschlussteil mit dem Hauptrohr verbunden. Außerdem werden drei Teile des Nebenabgangs separat hergestellt. Dieses aus der Praxis bekannte Vorgehen ist daher mit einem hohen Herstellungsaufwand verbunden. Der Erfindung liegt somit die Aufgabe zugrunde, den Herstellungsaufwand für die Hauptleitung bzw. das Leitungssystem zu verringern.

Diese Aufgabe wird gelöst durch eine Hauptleitung zum Verteilen oder Sammeln eines Mediums und insbesondere eines Temperiermediums, wobei die Hauptleitung ein Hauptrohr und wenigstens drei Abgänge aufweist, wobei die Abgänge mit dem Hauptrohr verbunden sind, wobei das Hauptrohr eine Achse A umfasst und eine axiale Richtung definiert, wobei wenigstens einer der Abgänge einen Leitungsverbinder und ein Rohrstück aufweist, wobei ein erstes Ende des Rohrstücks mit dem Hauptrohr verbunden ist, wobei ein zweites Ende des Rohrstücks mit dem Leitungsverbinder verbunden ist, dadurch gekennzeichnet, dass das erste Ende und vorzugsweise das zweite Ende des Rohrstücks integral mit dem Hauptrohr verbunden ist.

Der Erfindung liegt zunächst die Erkenntnis zugrunde, dass Rohrstücke aufweisende Nebenabgänge eine große Flexibilität bzw. Toleranz hinsichtlich der Anschlüsse an weiterführende Komponenten, beispielsweise Wärmetauscher, bieten. Diese Flexibilität wurde allerdings im Stand der Technik aufgrund der zahlreichen Schweißverbindungen (Rohrstück mit Hauptrohr) mit einem großen Herstellungsaufwand erkauft.

Es wurde gefunden, dass eine integrale Verbindung des Rohrstücks mit dem Hauptrohr wenigstens eine Schweiß- und/oder Pressverbindung je Abgang einspart und so den Aufwand zur Herstellung der Hauptleitung deutlich verringert. Da eine Hauptleitung durchaus 10-20 Abgänge aufweisen kann, werden entsprechend viele Verbindungsvorgänge vermieden. Die integrale Verbindung wird besonders vorzugsweise durch Blasformen erzielt, so dass nach dem Blasformvorgang nur noch ein Entbutzvorgang und vor allem nur noch ein Schweißvorgang bei jedem Abgang für den jeweiligen Leitungsverbinder erforderlich ist. Außerdem wird der Anteil des Ausschusses aufgrund der fehleranfälligen (Schweiß-)Verbindungen vermieden, wodurch der Herstellungsaufwand ebenfalls verringert wird. Im Ergebnis wird die eingangs genannte Aufgabe durch die Erfindung gelöst.

Eine Herstellung eines solchen Hauptrohres bzw. einer solchen Hauptleitung mit integralen/einstückigen Nebenabgängen aus einem großflächigen Vorformling und anschließender Abtrennung des Überschusses (Butzen) mit Wellrohrabschnitten und insbesondere durch die Auswahl eines Materials, das eine erhöhte Flexibilität bietet, beispielsweise ein thermoplastisches Elastomer, erlaubt ein kostenoptimiertes Verfahren unter gleichzeitiger Erzielung von hohen Positionstoleranzen der Nebenabgänge.

Der Begriff "axial" bezieht sich vorzugsweise auf eine/die Achse bzw. Mittelachse des Hauptrohrs. Es ist möglich, dass das Hauptrohr gebogen ist oder sogar einen optimierten bzw. nicht-kreisrunden Querschnitt aufweist, sodass die axiale Richtung von der axialen Position des Hauptrohrs abhängig ist. Im Falle des optimiert geformten Querschnitts ist zusätzlich eine maximale Ausnutzung von Bauraumengstellen realisierbar. Zu einer bestimmten axialen Richtung gehören zweckmäßigerweise eine Vielzahl an radialen Richtungen und/oder Umlaufrichtungen bzw. tangentiale Richtungen. Im Falle eines gebogenen Hauptrohrs sind somit nicht nur die axialen Richtungen positionsabhängig, sondern auch die radialen Richtungen sowie die Umlaufrichtungen. Zweckmäßigerweise beziehen sich die Richtungsangaben "axial", "radial" und "tangential" jeweils auf eine bestimmte Position bzw. einen bestimmten Abschnitt des Hauptrohrs. Die Richtungsangaben können analog auf die Nebenabgänge und/oder den Hauptabgang angewendet werden.

Der Begriff "einstückig" meint im Folgenden vorzugsweise, dass der einstückige Körper nur in zerstörender Weise, beispielsweise durch Schneiden, in zwei oder mehr Stücke geteilt werden kann. Als Beispiel der Einstückigkeit mag ein Rohr mit mehreren koextrudierten Schichten dienen, welches zwar einstückig, nicht aber über die gesamte Rohrwand hinweg integral ausgebildet ist.

Der Begriff "integral" meint bevorzugt einen Körper, welcher aus lediglich einer Schmelze entstanden ist. Beispielsweise sind aus lediglich einer Kunststoffschmelze spritzgegossene Körper integral ausgebildete Körper. Folglich ist ein mehrschichtiges, koextrudiertes Rohr schichtweise integral ausgebildet und insgesamt bzw. über die gesamte Rohrwand hinweg auch einstückig, nicht aber über die gesamte Rohrwand hinweg integral ausgebildet. Eine Schicht eines mehrschichtigen Rohrs ist entlang des Rohrs integral und insbesondere vollständig integral ausgebildet. Der Grund hierfür ist, dass jede der Schichten einer eigenen Schmelze zugeordnet ist. Die verschiedenen Schichten sind zweckmäßigerweise mikroskopisch oder durch andere Bildgebungsverfahren insbesondere an Grenzflächen zwischen den Schichten erkennbar. Der Begriff "integral" umfasst bevorzugt "schichtweise integral" ausgebildete Körper und "vollständig integral" ausgebildete Körper. Der Ausdruck "integral verbunden" meint vorzugsweise, dass sich wenigstens eine Schicht und vorzugsweise alle Schichten des Hauptrohrs wenigstens abschnittweise und bevorzugt vollständig auf das Rohrstück erstrecken bzw. das Rohrstück - insbesondere in axialer Richtung - durchgängig ausbilden.

Gemäß einer besonders bevorzugten Ausführungsform weist das Rohrstück des wenigstens einen Abgangs bzw. des wenigstens einen Nebenabgangs bzw. des Hauptabgangs eine axiale Ausdehnung von wenigstens 22 bzw. 25 bzw. 30 bzw. 40 bzw. 50 mm auf. Dies bewirkt eine große Flexibilität der Abgänge und kann gut mittels Blasformen hergestellt werden. Gemäß einer besonders bevorzugten Ausführungsform weist das Rohrstück des wenigstens einen Abgangs bzw. des wenigstens einen Nebenabgangs bzw. des Hauptabgangs eine axiale Ausdehnung von höchstens 200/150/100/80mm auf.

Gemäß einer sehr bevorzugten Ausführungsform ist einer der Abgänge ein Hauptabgang. Mit Vorteil ist wenigstens einer der Abgänge ein Nebenabgang. Es ist bevorzugt, dass ein Innendurchmesser des Hauptabgangs und/oder des Hauptrohrs wenigstens axial abschnittsweise größer ist als ein Innendurchmesser des wenigstens einen Nebenabgangs bzw. eines Abschnitts des wenigstens einen Nebenabgangs. Der Innendurchmesser des wenigstens einen Nebenabgangs kann an lediglich einer Stelle kleiner sein als ein Innendurchmesser des Hauptabgangs und insbesondere als Drossel ausgebildet sein. Dies dient der möglichst druckoptimierten Führung des Temperiermediums. Mit dem Begriff "Innendurchmesser" ist vorzugsweise der kleinste Innendurchmesser des Hauptrohrs bzw. Hauptabgangs bzw. des jeweiligen Nebenabgangs gemeint.

Die Hauptleitung umfasst bevorzugt wenigstens 4/5/6/7/8/9/10/11 Abgänge. Es ist möglich, dass wenigstens 2/3/4/5/6/7/8/9/10 der Abgänge Nebenabgänge sind. Es ist möglich, dass die Hauptleitung lediglich einen Hauptabgang umfasst. Mit Vorteil umfasst das Hauptrohr wenigstens 3/4/5/6/7/8/9/10/11 Öffnungen. Zweckmäßigerweise ist wenigstens eine bzw. lediglich eine der Öffnungen eine Hauptöffnung. Mit Vorteil ist wenigstens 1/2/3/4/5/6/7/8/9/10 der Öffnungen eine Nebenöffnung. Vorzugsweise ist die wenigstens eine Nebenöffnung bzw. sind die Nebenöffnungen des Hauptrohrs dem wenigstens einen Nebenabgang bzw. den in Nebenabgängen zugeordnet. Die Hauptöffnung des Hauptrohrs ist vorzugsweise dem Hauptabgang zugeordnet. Vorteilhafterweise ist eine lichte Fläche der Nebenöffnung bzw. einer der Nebenöffnungen kleiner als eine lichte Fläche der Hauptöffnung.

Es ist möglich, dass das Hauptrohr wenigstens ein verschlossenes Rohrende oder zwei verschlossene Rohrenden umfasst. Dies ist ein Anzeichen einer bevorzugten Herstellung des Hauptrohrs bzw. der Hauptleitung mittels des Blasformverfahrens. Das verschlossene Rohrende bzw. die verschlossenen Rohrenden ist/sind vorzugsweise integral mit einen mittleren Drittel bzw. Fünftel des Hauptrohrs und weiter vorzugsweise integral miteinander verbunden.

Es ist bevorzugt, dass das Hauptrohr Öffnungen bzw. Nebenöffnungen bzw. eine Hauptöffnung aufweist. Zweckmäßigerweise ist je eine der Öffnungen einem Abgang bzw. je eine der Nebenöffnungen einem Nebenabgang bzw. die Hauptöffnung dem Hauptabgang zugeordnet. Mit Vorteil umfasst die Hauptleitung bzw. der wenigstens eine Abgang einen Übergangsabschnitt, welcher einen Übergang vom Hauptrohr zu dem Rohrstück ausbildet. Der wenigstens eine Abgang weist im Bereich des Übergangsabschnitt vorzugsweise eine andere axiale Richtung als das Hauptrohr auf. Gemäß einer besonders bevorzugten Ausführungsform wird wenigstens eine der Öffnungen bzw. Nebenöffnungen bzw. die Hauptöffnung durch einen Übergangsabschnitt gebildet, wobei der Übergangsabschnitt gegenüber einer, vorzugsweise zylindrischen, Außenoberfläche des Hauptrohrs in einem Querschnitt des Hauptrohrs vorzugsweise wenigstens abschnittsweise - insbesondere nach radial außen - vorspringt. Der Begriff "vorspringt" meint insbesondere, dass im Querschnitt des Hauptrohrs eine Ausbuchtung der Wand des Hauptrohrs nach außen erkennbar ist. Zweckmäßigerweise steht der Übergangsabschnitt gegenüber einer Außenoberfläche der umlaufenden Mantelfläche des Hauptrohrs nach radial außen oder innen vor. Der Übergangsabschnitt ist vorzugsweise ringförmig und insbesondere kreisringförmig ausgebildet. Es ist von Vorteil, dass eine niedrigste Stelle des Übergangsabschnitts wenigstens 1/1,5/2/2,5/3/3,5/4 mm gegenüber einer Außenoberfläche bzw. der umlaufenden Mantelfläche des Hauptrohrs nach radial außen hervorspringt. Der Übergangsabschnitt ist mit Vorteil wellrohrfrei ausgebildet. Zweckmäßigerweise steht eine höchste Stelle des Übergangsabschnitts höchstens 20 bzw. 15 bzw. 10 bzw. 8 bzw. 6 mm von einer Außenoberfläche der umlaufenden Mantelfläche des Hauptrohrs in radialer Richtung nach außen ab.

Mit Vorteil umfasst/umfassen wenigstens einer der bzw. mehrere der bzw. alle der Abgänge bzw. Nebenabgänge bzw. der Hauptabgang einen Verbinder bzw. Leitungsverbinder. Der Leitungsverbinder des wenigstens einen Nebenabgangs bzw. Hauptabgangs umfasst vorzugsweise einen Leitungsverbinderkörper und/oder eine Dichtung. Die Dichtung ist bevorzugt als Dichtring ausgebildet und weist mit Vorteil ein Elastomer auf. Mit Vorteil umfasst der Leitungsverbinder bzw. der Leitungsverbinderkörper bzw. der Kupplungsabschnitt des Leitungsverbinderkörpers eine umlaufende Dichtungsnut, in welche die Dichtung bzw. der Dichtungsring eingesetzt ist. Es ist bevorzugt, dass die Dichtungsnut an einer Innenenseite des Kupplungsabschnitts angeordnet ist.

Der Leitungsverbinderkörper ist besonders vorzugsweise einstückig und insbesondere integral ausgebildet. Der Leitungsverbinderkörper weist vorzugsweise einen Kunststoff auf und ist bevorzugt mittels Spritzguss hergestellt. Vorzugsweise ist der Leitungsverbinderkörper einstückig und insbesondere integral ausgebildet. Mit Vorteil umfasst der Leitungsverbinderkörper einen Anschlussabschnitt und/oder einen Kupplungsabschnitt und/oder einen Mittelabschnitt. Der Anschlussabschnitt des Leitungsverbinders ist vorzugsweise mit dem Rohrstück des wenigstens einen Abgangs - insbesondere stoffschlüssig und besonders vorzugsweise mittels Schweißung - verbunden.

Der Kupplungsabschnitt des Leitungsverbinders ist vorzugsweise ausgebildet, mit einer Fluidkomponente eine - bevorzugt lösbare - fluiddichte Verbindung einzugehen. Die Fluidkomponente ist bevorzugt Bestandteil einer Antriebsbatterie. Es ist sehr von Vorteil, wenn der Leitungsverbinder bzw. Leitungsverbinderkörper bzw. Kupplungsabschnitt wenigstens ein Rastelement oder zwei Rastelemente zum rastenden Verbinden mit einer/der Fluidkomponente aufweist. Hierdurch kann durch das Vorsehen lediglich eines Leitungsverbinders eine weitere Fluidkomponente, z.B. ein Wärmetauscher einer Antriebsbatterie, mit der Hauptleitung komfortabel verbunden werden. Es ist bevorzugt, dass der Leitungsverbinder einen Rückhalter aufweist. Der Rückhalter umfasst vorteilhafterweise das wenigstens eine Rastelement. Der Rückhalter ist vorzugsweise u-förmig oder o-förmig ausgebildet. Der Rückhalter mag Kunststoff und/oder Metall bzw. Draht aufweisen. Das wenigstens eine Rastelement ist mit Vorteil federelastisch ausgebildet. Vorteilhafterweise ist das wenigstens eine Rastelement als Rastarm ausgestaltet. Es ist bevorzugt, dass der wenigstens eine Rastarm in radialer Richtung federelastisch beweglich ist.

Mit Vorteil umfasst der wenigstens eine Abgang bzw. Nebenabgang bzw. Hauptabgang bzw. das wenigstens eine Rohrstück bzw. das Hauptrohr einen Kunststoff. Bevorzugt weist der wenigstens eine Abgang bzw. Nebenabgang bzw. Hauptabgang bzw. das wenigstens eine Rohrstück bzw. das Hauptrohr wenigstens 50 bzw. 70 bzw. 90 Gew.-% Kunststoff auf. Der Kunststoff ist vorzugsweise ein thermoplastischer Kunststoff und mag beispielsweise ein Polyamid und/oder ein thermoplastisches Elastomer aufweisen.

Es ist ganz besonders bevorzugt, dass das Hauptrohr - insbesondere über 50 bzw. 70 bzw. 90 bzw. 100 % der axialen Länge des Hauptrohrs hinweg - einstückig, vorzugsweise integral bzw. wenigstens schichtweise integral und besonders vorzugsweise vollständig integral ausgebildet ist. Hierdurch wird eine langlebige fluidische Dichtigkeit erreicht. Außerdem wird hierdurch ein relativ geringer Herstellungsaufwand bezogen auf die Herstellung der Hauptleitung bzw. des Hauptrohrs erreicht. Das Hauptrohr weist mit Vorteil eine Länge von wenigstens 20 bzw. 30 bzw. 50 bzw. 70 bzw. 90 cm auf. Das Hauptrohr bzw. die Rohrwand des Hauptrohrs kann über 50 bzw. 70 bzw. 90 bzw. 100 % der axialen Länge des Hauptrohrs hinweg lediglich eine Schicht aufweisen. Das Hauptrohr bzw. die Rohrwand des Hauptrohrs kann über 50 bzw. 70 bzw. 90 bzw. 100 % der axialen Länge des Hauptrohrs hinweg mehrere Schichten aufweisen.

Gemäß einer besonders bevorzugten Ausführungsform ist das Rohrstück des wenigstens einen Abgangs - insbesondere über 50 bzw. 70 bzw. 90 bzw. 100 % der axialen Länge des Rohrstücks hinweg - einstückig, vorzugsweise integral bzw. wenigstens schichtweise integral und besonders vorzugsweise vollständig integral ausgebildet. Hierdurch wird eine langlebige fluidische Dichtigkeit erreicht. Außerdem wird hierdurch ein relativ geringer Herstellungsaufwand bezogen auf die Herstellung der Hauptleitung bzw. des Nebenabgangs erreicht. Das Rohrstück kann über 50 bzw. 70 bzw. 90 bzw. 100 % der axialen Länge des Rohrstücks hinweg lediglich eine Schicht aufweisen. Das Rohrstück kann über 50 bzw. 70 bzw. 90 bzw. 100 % der axialen Länge des Rohrstücks hinweg mehrere Schichten aufweisen.

Es ist sehr bevorzugt, dass das Rohrstück des wenigstens einen Abgangs einstückig, vorzugsweise integral bzw. wenigstens schichtweise integral und besonders vorzugsweise vollständig integral mit dem Hauptrohr verbunden ist. Dies bewirkt eine besonders gute Verbindung zwischen dem wenigstens einen Abgang und dem Hauptrohr und wird auf effektive Weise mittels Blasformen erreicht. Der Abgang umfasst mit Vorteil einen Übergangsabschnitt, welcher das Hauptrohr mit dem Rohrstück verbindet. Der Übergangsabschnitt ist zweckmäßigerweise dem ersten Ende des Rohrstücks des wenigstens einen Abgangs zugeordnet. Der Übergangsabschnitt des Abgangs ist bevorzugt integral mit dem Hauptrohr und mit dem Rohrstück bzw. dem zweiten Ende des Rohrstücks verbunden.

Mit Vorteil weist ein weiterer Abgang der wenigstens drei Abgänge ein weiteres Rohrstück auf. Das weitere Rohrstück ist besonders bevorzugt mit dem Hauptrohr integral verbunden. Es ist sehr bevorzugt, dass das Rohrstück des wenigstens einen Abgangs integral mit dem weiteren Rohrstück des weiteren Abgangs verbunden ist. Es ist bevorzugt, dass alle Abgänge jeweils ein Rohrstück aufweisen und die Rohrstücke alle miteinander integral verbunden sind.

Es ist möglich, dass das Hauptrohr und/oder der wenigstens eine Abgang wenigstens einen Wellrohrabschnitt und vorzugsweise wenigstens zwei bzw. mehrere Wellrohrabschnitte umfasst. Hierdurch wird die Flexibilität der Hauptleitung erhöht. Der Begriff "Wellrohrabschnitt" meint vorzugsweise einen Abschnitt mit sich wiederholend alternierenden Innen- und/oder Außendurchmessern. Die Kontur des Innen- und/oder Außendurchmessers kann in einem Längsschnitt des Wellrohrabschnitts beispielsweise sinusförmig, rechteckig oder sägezahnartig ausgebildet sein, sodass der Begriff "gewellt" sich vorzugsweise nicht nur auf sinusförmige Konturen erstreckt.

Zweckmäßigerweise umfasst der wenigstens eine Abgang lediglich einen Wellrohrabschnitt. Mit Vorteil weist das Hauptrohr wenigstens 2 oder 3 Wellrohrabschnitte auf. Vorzugsweise umfasst das Hauptrohr wenigstens einen wellrohrfreien Abschnitt bzw wenigstens 2/3/4 wellrohrfreie Abschnitte auf. Die Zahl der wellrohrfreien Abschnitte des Hauptrohrs ist bevorzugt um 1 größer als die Zahl der Wellrohrabschnitte des Hauptrohrs. Zweckmäßigerweise wechseln sich die Wellrohrabschnitte und die wellrohrfreien Abschnitte des Hauptrohrs in axialer Richtung einander ab. Es ist sehr bevorzugt, dass die Abgänge wenigstens zum Teil und vorzugsweise ausnahmslos dem wellrohrfreien Abschnitt bzw. den wellrohrfreien Abschnitten des Hauptrohrs zugeordnet sind bzw. daran angeschlossen sind. Vorzugsweise ist der wenigstens eine Wellrohrabschnitt abgangsfrei ausgebildet.

Gemäß einer bevorzugten Ausführungsform weist das Hauptrohr und/oder der wenigstens eine Abgang ein Elastomer auf. Dies bewirkt, dass sich das Hauptrohr bzw. die Abgänge aufgrund der Flexibilität des Elastomers deutlich einfacher in beengte Umgebungen einbauen lassen. Es ist bevorzugt, dass ein Gewichtsanteil des Elastomers wenigstens 30 bzw. 40 bzw. 50 bzw. 60 bzw. 70 bzw. 80% beträgt. Das Elastomer ist vorzugsweise thermoplastisch und besonders vorzugsweise ein thermoplastisches Vulkanisat. Mit Vorteil umfasst das Elastomer ein EPDM. Bevorzugt weist das Elastomer ein Polypropylen auf.

Ganz besonders bevorzugt umfasst das Elastomer ein **EPDM** und ein Polypropylen bzw. ein **EPDM** in einer Polypropylen-Matrix.

Die eingangs genannte Aufgabe wird gelöst durch ein Leitungssystem zum Verteilen und Sammeln eines Temperiermediums, wobei das Leitungssystem eine erste erfindungsgemäße Hauptleitung umfasst, wobei das Leitungssystem eine zweite erfindungsgemäße Hauptleitung aufweist. Dies bewirkt, dass sich die Wirkungen der Hauptleitung auf das gesamte Leitungssystem erstrecken. Die zweite Hauptleitung weist bevorzugt ein zweiten Hauptabgang und/oder ein zweites Hauptrohr und/oder zweite Nebenabgänge auf. Es ist möglich, dass die zweite Hauptleitung die Merkmale der erfindungsmäßen Hauptleitung und vorzugsweise sämtliche Merkmale der erfindungsgemäßen Hauptleitung aufweist.

Die eingangs genannte Aufgabe wird gelöst durch die Verwendung einer erfindungsgemäßen Hauptleitung bzw. eines erfindungsgemäßen Leitungssystems zur Temperierung einer mobilen oder stationären Einrichtung und insbesondere einer mobilen oder stationären Batterie. Die mobile Batterie ist vorzugsweise eine Antriebsbatterie eines Fahrzeugs. Die Hauptleitung bzw. das Leitungssystem sind insbesondere von Vorteil für Antriebsbatterien, da Antriebsbatterien häufig eine Vielzahl an Wärmetauschern aufweisen, welche parallel von dem Temperiermedium durchflossen werden. Die stationäre Einrichtung kann eine Verteilereinrichtung oder ein Batteriespeicher sein, beispielsweise ein Batteriespeicher für eine unterbrechungsfreie Stromversorgung einer kritischen Einrichtung oder ein Batteriespeicher zur Stabilisierung des Spannungsnetzes. Das Medium ist vorzugsweise ein Temperiermedium. Das Medium/Temperiermedium kann flüssig und/oder gasförmig ausgebildet sein. Das Medium/Temperiermedium mag lediglich in flüssiger Form vorliegen.

Die eingangs genannte Aufgabe wird gelöst durch ein Verfahren zur Herstellung einer Hauptleitung, insbesondere einer erfindungsgemäßen Hauptleitung, wobei die Hauptleitung ein Hauptrohr und wenigstens drei Abgänge aufweist, wobei die Abgänge mit dem Hauptrohr verbunden sind, wobei wenigstens einer der Abgänge einen Leitungsverbinder und ein Rohrstück aufweist, wobei ein erstes Ende des Rohrstücks mit dem Hauptrohr verbunden ist, wobei ein zweites Ende des Rohrstücks mit dem Leitungsverbinder verbunden ist, wobei vorzugsweise das Hauptrohr gemeinsam mit dem wenigstens einen Rohrstück mittels Blasformen hergestellt wird.

Zweckmäßigerweise wird ein Vorformling in eine Blasform eingelegt, aus welchem die Hauptleitung hergestellt wird. Der Vorformling mag beispielsweise mittels Spritzguss hergestellt worden sein. Der Vorformling umfasst mit Vorteil wenigstens eine Zuführungsöffnung für ein Blasgas, insbesondere Luft oder ein Luftgemisch, genutzt wird. Es ist möglich, dass der Vorformling vorgeformte Ausbuchtungen umfasst, die im Laufe des Blasformens die Form der bzw. einiger der Abgänge annehmen. Mit Vorteil ist wenigstens eine der bzw. sind einige der oder alle anderen Ausbuchtungen bzw. Abgänge während des Blasformens geschlossen und weist/weisen an dem jeweiligen Ende eine Kappe auf. Die jeweilige Kappe ist vorzugsweise mit dem jeweiligen Abgang bzw. mit dem Hauptrohr integral verbunden. Zweckmäßigerweise wird die wenigstens eine Kappe nach dem Blasformen von dem zugehörigen Abgang abgetrennt. Mit Vorteil wird nach dem Abtrennen der wenigstens einen Kappe der Leitungsverbinder an dem Abgang der abgetrennten Kappe - vorzugsweise mittels Schweißen - befestigt.

Nachfolgend wird die Erfindung anhand eines Ausführungsbeispiels mittels zweier Figuren erläutert. Es zeigen
- Figur 1: eine perspektivische Ansicht einer erfindungsgemäßen Hauptleitung und
- Figur 2: einen Ausschnitt der Hauptleitung aus Figur 1 im Längsschnitt.

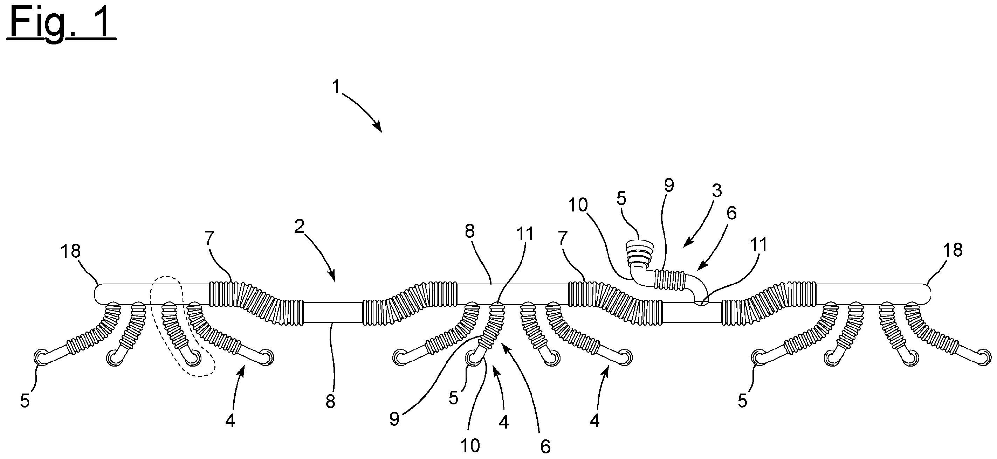

In Figur 1 ist eine erfindungsgemäße Hauptleitung 1 in voller Länge abgebildet. Die Hauptleitung 1 umfasst in diesem Ausführungsbeispiel ein Hauptrohr 2, einen Hauptabgang 3 sowie insgesamt 12 Nebenabgänge 4. Die Abgänge 3, 4 sind vorzugsweise jeweils an der umlaufenden Mantelfläche des Hauptrohrs 2 angeschlossen. Es ist bevorzugt, dass die Rohrenden 18 des Hauptrohrs 2 verschlossen ausgebildet sind. Mit Vorteil sind die Rohrenden 18 des Hauptrohrs 2 integral mit der umlaufenden Mantelfläche des Hauptrohrs 2 verbunden.

In diesem Ausführungsbeispiel ist die Hauptleitung 1 einem ersten Stirnende innerhalb eines Gehäuses einer Antriebsbatterie angeordnet. Es ist bevorzugt, dass eine zweite, hier nicht dargestellte Hauptleitung an dem gegenüberliegenden Ende der Antriebsbatterie innerhalb des Gehäuses befindlich ist. Zweckmäßigerweise strömt ein Temperierfluid durch den Leitungsverbinder 5 in das Rohrstück 6 des Hauptabgangs 3 und von dort in das Hauptrohr 2. Das Temperierfluid strömt zweckmäßigerweise von dem Hauptrohr 2 in die Nebenabgänge 4 und von dort aus durch die Antriebsbatterie bis zur nicht dargestellten Hauptleitung am anderen Ende der Antriebsbatterie.

Das Hauptrohr 2 umfasst gemäß Figur 1 vorzugsweise wenigstens einen Wellrohrabschnitt 7 und mit Vorteil mehrere Wellrohrabschnitte 7. Zweckmäßigerweise ist jeweils zwischen zwei Wellrohrabschnitten 7 des Hauptrohrs 2 ein wellrohrfreier Abschnitt 8 angeordnet. Die Wellrohrabschnitte 7 zeichnen sich vorteilhafterweise durch eine erhöhte Biegsamkeit gegenüber den wellrohrfreien Abschnitten 8 aus, was den Einbau der Hauptleitung 1 in beengte Räume - etwa in das Gehäuse eine Antriebsbatterie eines Fahrzeugs - maßgeblich erleichtert.

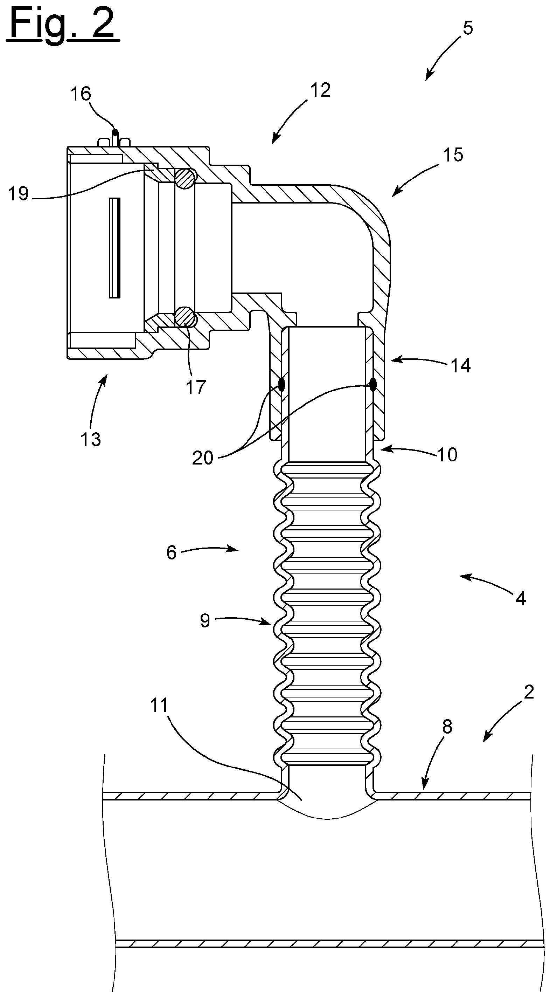

Es ist bevorzugt und in Figur 1 gezeigt, dass der Hauptabgang 3 einem wellrohrfreien Abschnitt 8 des Hauptrohrs 2 zugeordnet ist bzw. an diesen angeschlossen ist. Mit Vorteil umfasst der Hauptabgang 3 ein Rohrstück 6 und einen Leitungsverbinder 5. Vorzugsweise umfasst das Rohrstück 6 einen Wellrohrabschnitt 9 und bevorzugt wenigstens einen - vorzugsweise wellrohrfreien - Verbindungsabschnitt 10 zur Verbindung mit dem Leitungsverbinder 5. Der Leitungsverbinder 5 mag mit dem Verbindungsabschnitt 10 mittels Schweißung verbunden sein, was nachfolgend noch erläutert wird. Vorteilhafterweise umfasst der Abgang 3, 4 bzw. der Hauptabgang 3 bzw. Nebenabgang 4 einen Übergangsabschnitt 11, welcher den Übergang vom Hauptrohr 2 zu dem Rohrstück 6 des Hauptabgangs 3 markiert, s. die späteren Ausführungen zu Figur 2.

In Figur 1 ist ersichtlich, dass die Nebenabgänge 4 ähnlich wie der Hauptabgang 3 ausgebildet sind. Ein Nebenabgang 4 umfasst vorzugsweise ein Rohrstück 6 und einen Leitungsverbinder 5. Das Rohrstück 6 und der Leitungsverbinder 5 des Nebenabgangs 4 sind ähnlich zu dem Rohrstück 6 und dem Leitungsverbinder 5 des Hauptabgang 3 ausgestaltet, unterscheiden sich jedoch insbesondere hinsichtlich eines lichten Innendurchmessers. Es ist bevorzugt, dass ein lichter Innendurchmesser eines Nebenabgangs 4 kleiner ist als ein lichter Innendurchmesser des Hauptabgangs 3. Es ist bevorzugt, dass ein lichter Innendurchmesser des Hauptrohrs 2 größer ist als ein lichter Innendurchmesser des Nebenabgangs 4 und/oder des Hauptabgangs 3.

Das Rohrstück 6 des Nebenabgangs 4 ist bevorzugt mittels Schweißung mit dem Leitungsverbinder 5 des Nebenabgangs 4 verbunden. Das Rohrstück 6 des Nebenabgangs 4 mag einen Wellrohrabschnitt 9 aufweisen. Mit Vorteil umfasst der Nebenabgang 4 einen Übergangsabschnitt 11, welcher einen Übergang zwischen dem Hauptrohr 2 und dem Rohrstück 6 des Nebenabgangs 4 darstellt. Es ist bevorzugt, dass das Rohrstück 6 des Nebenabgangs 4 einen Verbindungsabschnitt 10 umfasst. Mit Vorteil ist der Leitungsverbinder 5 des Nebenabgangs 4 mit dem Verbindungsabschnitt 10 des Nebenabgangs 4 verbunden.

In Figur 2 ist beispielhaft ein Nebenabgang 4 vergrößert dargestellt, welcher in Figur 1 mit der gestrichelten Linie hervorgehoben wurde. Es ist besonders bevorzugt, dass das Hauptrohr 2 integral mit dem Rohrstück 6 des Nebenabgangs 4 bzw. den Rohrstücken 6 mehrerer oder aller Nebenabgänge 4 und/oder dem Rohrstück 6 des Hauptabgangs 3 verbunden ist. In diesem Ausführungsbeispiel ist eine Rohrwand des Hauptrohrs 2, des Rohrstücks 6 des Nebenabgangs 4 bzw. der Nebenabgänge 4 und/oder des Hauptabgangs 3 lediglich einschichtig ausgebildet.

Insbesondere ist von Vorteil, dass der Übergangsabschnitt 11 des Rohrstücks 6 des Nebenabgangs 4 bzw. mehrerer/aller der Nebenabgänge 4 und/oder des Hauptabgangs 3 integral mit dem Hauptrohr 2 und vorzugsweise mit dem Wellrohrabschnitt 9 verbunden ist. Mit Vorteil ist der Verbindungsabschnitt 10 mit dem Wellrohrabschnitt 9 bzw. dem Übergangsabschnitt 11 des Rohrstücks 6 des Nebenabgangs 4 und/oder des Hauptabgangs 3 integral verbunden. Es ist ganz besonders bevorzugt, dass der Verbindungsabschnitt 10 des Rohrstücks 6 des Nebenabgangs 4 bzw. der Nebenabgänge 4 und/oder des Hauptabgangs 3 integral mit dem Hauptrohr 2 verbunden ist.

In diesem Ausführungsbeispiel wurde das Hauptrohr 2 gemeinsam mit den Abgängen 3, 4 mittels Blasformen hergestellt. Hierdurch können sehr lange Rohrstücke 6 der Nebenabgänge 4 und/oder des Hauptabgangs 4 erzeugt werden, die integral mit dem Hauptrohr 2 verbunden sind. In diesem Ausführungsbeispiel war nach dem Blasvorgang mit Ausnahme eines Abgangs 3, 4 jeder andere Abgang 3, 4 mit einer Kappe versehen, welche Kappen nach dem Blasvorgang allesamt abgeschnitten wurden. Lediglich die Rohrenden 18 des Hauptrohrs blieben verschlossen. In diesem Ausführungsbeispiel wurde während des Blasvorgangs Luft durch den Hauptabgang 3 in die Hauptleitung 1 eingeblasen. Nach dem Abschneidevorgang der Kappen an den Nebenabgängen 4 wurden die Abgänge 3, 4 allesamt mittels Schweißung mit dem jeweiligen Leitungsverbinder 5 verbunden.

In diesem Ausführungsbeispiel umfasst der Leitungsverbinder 5 des Nebenabgangs 4 bzw. mehrerer/aller der Nebenabgänge 4 und/oder des Hauptabgangs 3 bevorzugt einen Rückhalter 16, eine Dichtung 17, einen Dichtungshalter 19 und/oder einen Leitungsverbinderkörper 12. Es ist von Vorteil, dass der Leitungsverbinderkörper 12 Kunststoff aufweist und - vorzugsweise mittels Spritzguss - integral ausgebildet ist. Der Leitungsverbinderkörper 12 mag einen Kupplungsabschnitt 13, einen Anschlussabschnitt 14 und/oder einen Mittelabschnitt 15 aufweisen.

Der Kupplungsabschnitt 13 ist mit Vorteil dazu ausgebildet, mit einem komplementären Kupplungselement, insbesondere einem Stecker, verbunden zu werden. Der Mittelabschnitt 15 kann gerade oder gewinkelt ausgebildet sein. In anderen Ausführungsbeispielen kann der Leitungsverbinder 5 nicht-lösbar ausgebildet sein oder aber als männlicher Stecker ausgestaltet sein. Insbesondere der Leitungsverbinder 5 der Nebenabgänge 4 bzw. des Hauptabgangs 3 kann beliebigen Gestaltungswünschen unterworfen sein.

Der Anschlussabschnitt 14 dieses Ausführungsbeispiels ist als hohlzylindrische Aufnahme zum Einführen des Rohrstücks 6 - vorzugsweise mit innenliegender Schulter zum Anschlagen des Rohrstücks 6 - ausgebildet. Der Anschlussabschnitt 14 des Leitungsverbinders 5 des Nebenabgangs 4 und/oder des Hauptabgangs 3 kann allerdings auch zum Aufstecken des Rohrstücks 6 ausgebildet sein.

Es ist möglich, dass der Nebenabgang 4 bzw. Hauptabgang 3 eine Verbindungsstelle 20 aufweist, welche beispielsweise als Schweißnaht ausgebildet sein kann. Die Schweißnaht dieses Ausführungsbeispiels wurde mittels Laserschweißung hergestellt. Mit Vorteil umfasst der Leitungsverbinder 5 des Nebenabgangs 4 bzw. der Nebenabgänge 4 bzw. des Hauptabgangs 3 ein Farbpigment, welches für den Laserstrahl der Laserschweißung wenigstens teilweise transparent ist, sodass der Laserstrahl bis zur Grenzfläche zwischen dem Material des Anschlussabschnitts 14 des Leitungsverbinders 5 und dem Material des Verbindungsabschnitts 10 das Rohrstücks 6 durchdringt.

### Bezugszeichenliste

- 1: Hauptleitung
- 2: Hauptrohr
- 3: Hauptabgang
- 4: Nebenabgang
- 5: Leitungsverbinder von 3, 4
- 6: Rohrstück von 3, 4
- 7: Wellrohrabschnitt von 2
- 8: Wellrohrfreier Abschnitt von 2
- 9: Wellrohrabschnitt von 6
- 10: Verbindungsabschnitt von 6
- 11: Übergangsabschnitt von 3, 4
- 12: Leitungsverbinderkörper von 5
- 13: Kupplungsabschnitt von 5, 12
- 14: Anschlussabschnitt von 5, 12
- 15: Mittelabschnitt von 5, 12
- 16: Rastelement von 5
- 17: Dichtung von 5
- 18: Rohrende von 2
- 19: Dichtungshalter
- 20: Verbindungsstelle
- A: Achse

## Patentansprüche

1. Hauptleitung (1) zum Verteilen oder Sammeln eines Mediums und insbesondere eines Temperiermediums, wobei die Hauptleitung (1) ein Hauptrohr (2) und wenigstens drei Abgänge (3, 4) aufweist, wobei die Abgänge (3, 4) mit dem Hauptrohr (2) verbunden sind, wobei das Hauptrohr (2) eine Achse A umfasst und eine axiale Richtung definiert,
wobei wenigstens einer der Abgänge (3, 4) einen Leitungsverbinder (5) und ein Rohrstück (6) aufweist, wobei ein erstes Ende des Rohrstücks (6) mit dem Hauptrohr (2) verbunden ist, wobei ein zweites Ende des Rohrstücks (6) mit dem Leitungsverbinder (5) verbunden ist,
**dadurch gekennzeichnet, dass**
das erste Ende und vorzugsweise das zweite Ende des Rohrstücks (6) integral mit dem Hauptrohr (2) verbunden ist.

2. Hauptleitung (1) nach Anspruch 1, wobei das Rohrstück (6) eine axiale Ausdehnung von wenigstens 25 bzw. 30 bzw. 40 mm aufweist.

3. Hauptleitung (1) nach einem der Ansprüche 1 oder 2, wobei das Hauptrohr (2) einstückig, vorzugsweise integral bzw. wenigstens schichtweise integral und besonders vorzugsweise vollständig integral ausgebildet ist.

4. Hauptleitung (1) nach einem der Ansprüche 1 bis 3, wobei das Rohrstück (6) des wenigstens einen Abgangs (3, 4) einstückig, vorzugsweise integral bzw. wenigstens schichtweise integral und besonders vorzugsweise vollständig integral ausgebildet ist.

5. Hauptleitung (1) nach einem der Ansprüche 1 bis 4, wobei das Rohrstück (6) des wenigstens einen Abgangs (3, 4) einstückig, vorzugsweise integral bzw. wenigstens schichtweise integral und besonders vorzugsweise vollständig integral mit dem Hauptrohr (2) verbunden ist.

6. Hauptleitung (1) nach einem der Ansprüche 1 bis 5, wobei das Hauptrohr (2) und/oder der wenigstens eine Abgang (3 ,4) einen Wellrohrabschnitt (7, 8) aufweist/aufweisen.

7. Hauptleitung (1) nach einem der Ansprüche 1 bis 6, wobei das Hauptrohr (2) und/oder der wenigstens eine Abgang (3 ,4) ein Elastomer aufweist/aufweisen.

8. Leitungssystem zum Verteilen und Sammeln eines Mediums und insbesondere eines Temperiermediums, wobei das Leitungssystem eine erste Hauptleitung (1) nach einem der Ansprüche 1 bis 7 umfasst, wobei das Leitungssystem eine zweite Hauptleitung (1) nach einem der Ansprüche 1 bis 7 aufweist.

9. Verwendung einer Hauptleitung nach einem der Ansprüche 1 bis 7 bzw.
eines Leitungssystems nach Anspruch 8 zur Temperierung einer mobilen oder stationären Einrichtung, vorzugsweise zur Temperierung einer mobilen oder stationären Batterie, weiter vorzugsweise zur Temperierung einer Antriebsbatterie eines Fahrzeugs.

10. Verfahren zur Herstellung einer Hauptleitung (1), insbesondere einer Hauptleitung (1) nach einem der Ansprüche 1 bis 7, wobei die Hauptleitung (1) ein Hauptrohr (2) und wenigstens drei Abgänge (3, 4) aufweist, wobei die Abgänge (3, 4) mit dem Hauptrohr (2) verbunden sind, wobei wenigstens einer der Abgänge (3, 4) einen Leitungsverbinder (5) und ein Rohrstück (6) aufweist, wobei ein erstes Ende des Rohrstücks (6) mit dem Hauptrohr (2) verbunden ist, wobei ein zweites Ende des Rohrstücks (6) mit dem Leitungsverbinder (2) verbunden ist, wobei vorzugsweise das Hauptrohr (2) gemeinsam mit dem wenigstens einen Rohrstück (6) mittels Blasformen geformt wird.
